# EUROPÄISCHE PATENTSCHRIFT

(11) **EP 2 905 398 B1**
(45) Veröffentlichungstag und Bekanntmachung des Hinweises auf die Patenterteilung: **01.03.2017**
(21) Anmeldenummer: 14194095.7
(22) Anmeldetag: 20.11.2014
(51) Int. Cl.: E04H 6/00, B62H 3/00

(54) **Fahrradparkeinrichtung und Fahrradparksystem mit wenigstens einer Fahrradparkeinrichtung**
Bicycle parking device and bicycle parking system with at least one bicycle parking device
Installation de parking de vélo et système de parking de vélo ayant au moins une installation de parking de vélo

(30) Priorität: 11.02.2014 DE 102014101649
(43) Veröffentlichungstag der Anmeldung: 12.08.2015
(73) Patentinhaber: Progress Parking AG, 9016 St. Gallen (CH)
(72) Erfinder: Rust, Paul, 78337 Öhningen-Wangen (DE)
(74) Vertreter: Vötsch, Reiner

(56) Entgegenhaltungen:
- EP-B1- 0 677 628
- DE-A1-102009 028 211
- ASCHMONEIT E-K: "BESSERE INFRASTRUKTUR FUER FAHRRAEDER", TECHNISCHE RUNDSCHAU, HALLWAG AG, CH, Bd. 88, Nr. 17, 26. April 1996 (1996-04-26), Seite 32/33, XP000592149, ISSN: 1023-0823

## Beschreibung

### Stand der Technik

Die Erfindung betrifft eine Fahrradparkeinrichtung nach dem Oberbegriff des Anspruchs 1. Ferner betrifft die Erfindung ein Fahrradparksystem mit wenigstens einer erfindungsgemäßen Fahrradparkeinrichtung.

Aus der DE 10 2009 028 211 A1 ist eine Fahrradparkeinrichtung nach dem Oberbegriff des Anspruchs 1 bekannt. Die bekannte Fahrradparkeinrichtung zeichnet sich durch eine Fördereinrichtung für die Aufbewahrungselemente der Fahrräder aus, die in Form eines Paternosters ausgebildet ist. Hierzu sind die Fahrradaufbewahrungselemente an einem Fördermittel des Paternosters befestigt. Weitere Angaben hinsichtlich der genauen Ausbildung der Fahrradaufbewahrungselemente, insbesondere hinsichtlich einer ggf. vorhandenen Führung innerhalb des Paternosters, sind der Schrift nicht entnehmbar.

Aus dem Artikel "Bessere Infrastruktur für Fahrräder" der Zeitschrift Technische Rundschau, Band 88, Nr. 17 vom 26. April 1996 (ISSN: 1023-0823) ist auf den Seiten 32 und 33 darüber hinaus eine weitere Fahrradparkanlage nach dem Oberbegriff des Anspruchs 1 bekannt. Bei dieser Fahrradparkanlage sind die Fahrradaufbewahrungselemente an einem waagerecht umlaufenden Förderband angeordnet bzw. befestigt. Das Förderband dient somit dem Antrieb bzw. der Förderung der Fahrradaufbewahrungselemente. Auch dieser Offenbarung sind keine Einzelheiten hinsichtlich einer mechanischen Führung der Fahrradaufnahmeelemente entnehmbar.

Eine weitere Fahrradparkeinrichtung ist aus der EP 0 677 628 B1 bekannt. Diese Fahrradparkeinrichtung umfasst ein Gehäuse zur Aufnahme einer Vielzahl von Fahrrädern in Einzelaufbewahrungselementen. Diese sind an einer in Art eines Drehkarussells ausgebildeten Fördereinrichtung mit zwei übereinander angeordneten, voneinander unabhängigen Vorrichtungen für jeweils mehrere Einzelaufbewahrungselemente angeordnete Die Einzelaufbewahrungselemente ragen radial von der senkrecht angeordneten Drehachse der Fördereinrichtung ab. Das Einschleusen bzw. Ausschleusen eines Fahrrads aus einem Einzelaufbewahrungselement erfolgt im Bereich eines Türelements des ansonsten geschlossen ausgebildeten Gehäuses. Wesentlich ist, dass durch die radiale bzw. sternförmige Anordnung der Einzelaufbewahrungselemente für die Fahrräder an der Fördereinrichtung lediglich eine begrenzte Anzahl von Abstellmöglichkeiten für die Fahrräder vorgesehen ist, so dass die Aufnahmekapazrtat der bekannten Fahrradparkeinrichtung begrenzt ist, wenn diese ausschließlich oberhalb einer Stellfläche angeordnet ist und wenn diese, insbesondere aus baulichen bzw. baugenehmigungstechnischen Gründen, nur eine bestimmte Höhe aufweisen darf. Aus der bekannten Schrift ist es daher auch bekannt (Fig. 9) zusätzliche Aufbewahrungsmöglichkeiten für Fahrräder dadurch auszubilden, dass ein Teil der Fahrradparkeinrichtung unterhalb des Niveaus einer die Fahrradparkeinrichtung umgebenden (ebenerdigen) Fläche angeordnet ist. Dadurch ist zum Beispiel die Anordnung von drei übereiander angeordneten Ebenen für die Einzelaufbewahrungselemente möglich. Eine derartige Ausbildung erfordert jedoch umfangreiche bauliche Maßnahmen im Bereich der Stellfläche für die Fahrradparkeinrichtung, insbesondere einen entsprechenden Aushub sowie Fundamente, Seitenwände und ähnliches, um den benötigten Bauraum für die Fahrradparkeinrichtung zur Verfügung zu stellen.

### Offenbarung der Erfindung

Ausgehend von dem dargestellten Stand der Technik liegt der Erfindung die Aufgabe zugrunde, eine Fahrradparkeinrichtung nach dem Oberbegriff des Anspruchs 1 derart weiterzubilden, dass eine mechanisch besonders einfache Möglichkeit des Transport der Aufbewahrungselemente innerhalb des Gehäuses ermöglicht wird.

Diese Aufgabe wird erfindungsgemäß bei einer Fahrradparkeinrichtung mit den Merkmalen des Anspruchs 1 gelöst.

Der Erfindung liegt die Idee zugrunde, durch an dem Aufbewahrungselement angeordnete Rollenelemente, die in mit Längsrichtung des Gehäuses verlaufenden Führungsschienen zusammenwirken, es zu ermöglichen, dass das Aufbewahrungselement zwischen den Führungsschienen translatorisch bewegt werden kann.

Vorteilhafte Weiterbildungen der erfindungsgemäßen Fahrradparkeinrichtung sind in den Unteransprüchen aufgeführt.

In konkreter Ausgestaltung des zuletzt gemachten Vorschlags kann es vorgesehen sein, dass der Transport eines Aufbewahrungselements durch Anlagekontakt mit einem anderen Aufbewahrungselement erfolgt. Mit anderen Worten gesagt bedeutet dies, dass ein Aufbewahrungselement durch ein anderes Aufbewahrungselement verschoben wird, ohne dass dieses einen separaten Antrieb aufweisen muss oder mit einem Antriebsmittel (beispielsweise einer Antriebskette) unmittelbar gekoppelt sein muss. In der Praxis kann es dabei vorgesehen sein, dass im Bereich der an den jeweiligen Stirnseiten bzw. Stirnenden angeordneten Fördereinrichtung diese derart ausgebildet ist, dass beim Ausschieben eines Einzelaufbewahrungselements aus der Hebeeinrichtung die in Anlagekontakt in einer Reihe befindlichen Aufbewahrungselemente um die Breite eines Aufbewahrungselements verschoben bzw. um eine Stelle weiter transportiert werden.

In konstruktiv besonders bevorzugter Ausgestaltung der Fahrradparkeinrichtung ist es vorgesehen, dass innerhalb des Gehäuses der Fahrradparkeinrichtung zwei übereinander angeordnete Reihen mit jeweils mehreren parallel zueinander angeordneten Aufbewahrungselementen vorgesehen sind, wobei die Längsrichtung der jeweils zumindest im Wesentlichen eine rechteckförmige Grundfläche aufweisenden Aufbewahrungselemente rechtwinklig zur Längserstreckung des Gehäuses verläuft, und dass im Bereich zweier Endbereiche des Gehäuses die Fördereinrichtung eine Hebeeinrichtung zum Heben bzw. Absenken eines Aufbewahrungselements zwischen den Ebenen der Reihen aufweist Eine derartige Ausbildung ermöglicht es insbesondere, aufgrund der normalerweise vorgegebenen maximalen Breite einer Transportfläche, beispielsweise eines Tiefladers, das Gehäuse mit einer Breite von beispielsweise knapp unter 3m auszubilden, wobei die Aufbewahrungselemente für die Fahrräder dann jeweils quer zur Längserstreckung des Gehäuses angeordnet sind. Insbesondere ermöglicht es eine derartige konstruktive Ausbildung auch, die Anzahl der Aufbewahrungselemente sehr einfach an eine zur Verfügung stehende Ladelänge eines Transportmittels anzupassen, ohne dass hierzu besondere konstruktive Maßnahmen erforderlich sind.

Um einerseits einen möglichst optimalen Schutz vor äußeren Eingriffen (Vandalismus) zu ermöglichen, und andererseits beispielsweise ein Herausfallen von Gegenständen aus den Aufbewahrungselementen in den Innenbereich des Gehäuses zu vermeiden, was entweder zur Funktionsbeeinträchtigungen führt oder aber zu einer Beschädigung oder einem Verlust des entsprechenden Gegenstands, wird vorgeschlagen, dass das Aufbewahrungselement als ein bis auf eine mit der Zugangsöffnung im Gehäuse ausrichtbaren Öffnung geschlossene Element ausgebildet ist. Es wird somit ein im Wesentlichen wannenförmiges Element vorgeschlagen, das einen optimalen Schutz sowie eine besonders sichere Aufnahme von Fahrrädern bzw. Gegenständen im Bereich des Aufbewahrungselements ermöglicht.

In Fortbildung des zuletzt gemachten Vorschlags kann es vorgesehen sein, dass das Aufbewahrungselement einen Aufbewahrungsbehälter für von dem Fahrrad separate bzw. an diesem nicht befestigte Gegenstände aufweist. Ein derartiger Aufbewahrungsbehälter kann dabei insbesondere auch als beispielsweise mittels eines Schlüssels abschließbares Behältnis ausgebildet sein, das beispielsweise Einkäufe, aber auch Wertgegenstände aufnimmt und einen erhöhten Zugriffs- bzw. Diebstahlschutz ausbildet. Auch ist beispielsweise die Aufnahme von Fahrradzubehör, wie einem Helm oder aber Fahrradgepäck o.ä. denkbar.

Der Trend bei Fahrrädern geht mehr und mehr auch zu sogenannten "E-Bikes", die einen Antriebsakku für einen Elektromotor des Fahrrads aufweisen. In einer vorteilhaften Weiterbildung der Erfindung ist es vorgesehen, dass wenigstens eines der Aufbewahrungselemente eine Ladeeinrichtung zur Ladung einer Batterie eines E-Bikes aufweist. Mit anderen Worten gesagt bedeutet dies, dass während der Zeit, in der sich das Fahrrad in der Fahrradparkeinrichtung befindet, die Batterie des E-Bikes aufgeladen werden kann, so dass nach Herausnahme des Fahrrads zur Weiterfahrt die Batterie wieder aufgeladen ist bzw. einen höheren Ladestand aufweist. Eine derartige Ladeeinrichtung besteht im einfachsten Fall in der Bereitstellung einer entsprechenden Steckdose zum Anschluss eines Ladegeräts, oder aber, insbesondere für zukünftige Anwendungen, in einer kontaktlosen, insbesondere einer induktiven Lademöglichkeit für die Batterie. Selbstverständlich ist es im Rahmen der Erfindung dabei angedacht, dass für diese zusätzliche Leistung der Verwender eine entsprechende Gebühr bezahlen soll.

Insbesondere, wenn mehrere Verwender ihr Fahrrad gleichzeitig in der Fahrradparkeinrichtung parken wollen, oder aber mehrere Radfahrer ihr Fahrrad gleichzeitig aus der Fahrradparkeinrichtung entnehmen wollen (beispielsweise bei Fahrradreisegruppen), ist es zur Vermeidung von längeren Wartezeiten von Vorteil, wenn das Gehäuse an gegenüberliegenden Endbereichen jeweils eine, mit einem Türelement des Gehäuses verschließbare Zugangsöffnung aufweist. Dadurch ist es beispielsweise möglich, an beiden Zugangsöffnungen gleichzeitig ein Fahrrad in ein Aufbewahrungselement abzustellen.

Um zum einen zu vermeiden, dass eine Fahrradparkeinrichtung dadurch, dass sie als mobile Einheit ausgebildet ist, unberechtigterweise wegtransportiert bzw. entwendet wird bzw. um einen möglichst einfachen Transport und ein einfaches Handling der Fahrradparkeinrichtung insbesondere zum Beladen bzw. Entladen von einem Transportmittel (Tieflader o.ä.) zu gewährleisten, weist die Fahrradparkeinrichtung an oder in ihrem Gehäuse bzw. der Trägerstruktur Verankerungsmittel zum Verankern des Gehäuses mit einer Stellfläche und/oder Halte- und Transportelemente zum Transportieren des Gehäuses bzw. der Fahrradparkeinrichtung auf.

Die Erfindung umfasst auch ein Fahrradparksystem mit wenigstens einer erfindungsgemäßen Fahrradparkeinrichtung. Das Fahrradparksystem zeichnet sich erfindungsgemäß dadurch aus, dass drahtlose Kommunikationsmittel zur Datenübertragung zwischen der wenigstens einen Fahrradparkeinrichtung und einem Datenknotenpunkt vorgesehen sind. Eine derartige Ausbildung des Fahrradparksystems ist insbesondere im Zusammenhang mit dem mobil aufstellbaren Gehäuse der Fahrradparkeinrichtung deshalb sinnvoll, weil dadurch Kommunikationsleitungen zwischen der Fahrradparkeinrichtung und mit der Fahrradparkeinrichtung zusammenwirkenden Einrichtungen, wie beispielsweise einem Kassenautomaten, der örtlich getrennt von der wenigstens einen Fahrzeugparkeinrichtung angeordnet sein kann, nicht erforderlich sind.

In konkreter Ausgestaltung des zuletzt genannten Gedankens ist es vorgesehen, dass die drahtlose Kommunikationseinrichtung dazu ausgebildet ist, Informationen wenigstens einer Überwachungskamera und/oder Störungsmeldungen und/oder Statusmeldungen und/oder Zahlungsinformationen der wenigstens einen Fahrradparkeinrichtung zu übermitteln.

Insbesondere kann es vorgesehen sein, dass der Datenknotenpunkt eine Verbindung mit dem Internet ermöglicht und/oder als eine stationäre Einheit ausgebildet ist. Unter einer stationären Einheit wird dabei beispielsweise entweder ein mit der Fahrradparkeinrichtung unmittelbar verbundenes, oder aber örtlich getrennt von diesem angeordnetes Bedienterminal o.ä. verstanden, so dass dort Informationen beispielsweise über die Anzahl von freien Einstellplätze in der Fahrradparkeinrichtung, Informationen hinsichtlich eines zu zahlenden Preises für die Aufbewahrung des Fahrrads oder aber sonstige Informationen angezeigt werden können. Auch ist über den Datenknotenpunkt eine datentechnische Verbindung der Fahrradparkeinrichtung mit einem Bahnbuchungs- bzw. Bahnreservierungssystem denkbar. So ist es beispielsweise möglich, dass ein Bahnreisender einen Parkplatz für sein Fahrrad in der Fahrradparkeinrichtung an einem Zielort reserviert und ggf. vorab (bargeldlos) bezahlt. Über eine maschinenlesbare Bestätigung kann der Bahnreisende bzw. Radfahrer dann sein Fahrrad in die Fahrradparkeinrichtung einstellen.

Im Zusammenhang mit der Möglichkeit der Verbindung mit dem Internet ermöglicht es das Fahrradparksystem darüber hinaus, beispielsweise bei Störungen der Fahrradparkeinrichtung diese Informationen einem Hersteller bzw. einem Wartungsdienst für die Fahrradparkanlage zuzuführen. Im Zusammenhang mit einer Überwachungskamera kann über das Internet entweder der Bereich der Fahrradparkeinrichtung durch entsprechendes Personal überwacht werden, oder aber durch entsprechende bidirektionale Ausbildung gezielt bestimmte Bereiche der Fahrradparkeinrichtung überwacht bzw. bildlich dargestellt werden, um beispielsweise bestimmte Schadensbilder an der Fahrradparkeinrichtung o.ä. erfassen zu können.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen Längsschnitt durch eine erste erfindungsgemäße Fahrradparkeinrichtung,
- Fig. 2: mehrere, bei einer Fahrradparkeinrichtung gemäß der Fig. 1 verwendete Einzelaufbewahrungselemente für jeweils ein Fahrrad, in perspektivischer Ansicht,
- Fig. 3: eine gegenüber Fig. 1 abgewandelte Fahrradparkeinrichtung in perspektivischer Darstellung,
- Fig. 4: die Fahrradparkeinrichtung gemäß Fig. 3 ohne deren Außen-(Gehäuse) in perspektivischer Darstellung,
- Fig. 5: die Fahrradparkeinrichtung gemäß Fig. 4 in Draufsicht,
- Fig. 6: eine Ansicht in Richtung des Pfeils VI der Fig. 5 und
- Fig. 7: eine vereinfachte Darstellung eines Fahrradparksystems unter Verwendung zweier erfindungsgemäßer Fahrradparkeinrichtungen.

Gleiche Elemente bzw. Elemente mit gleicher Funktion sind in den Figuren mit den gleichen Bezugsziffern versehen.

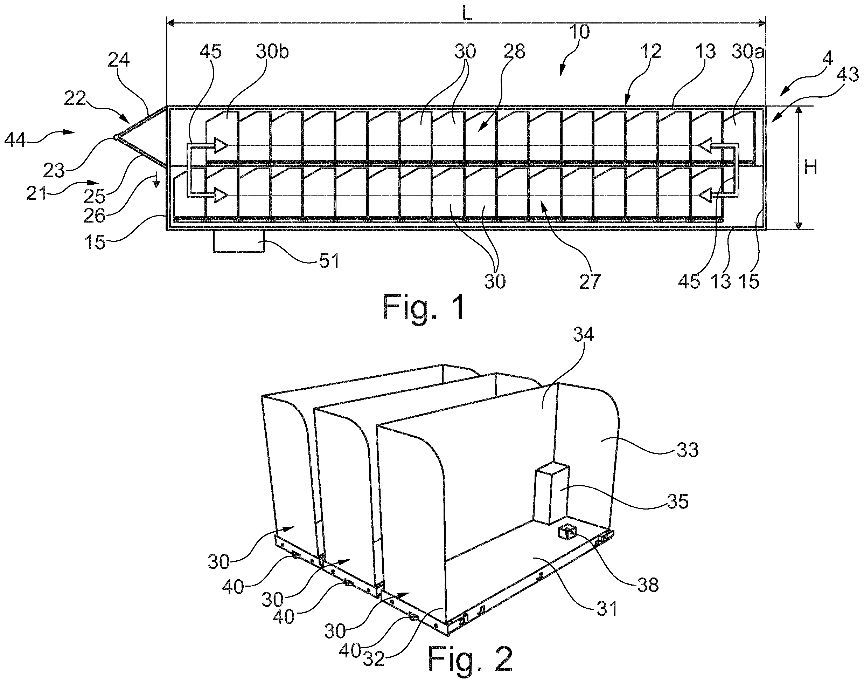

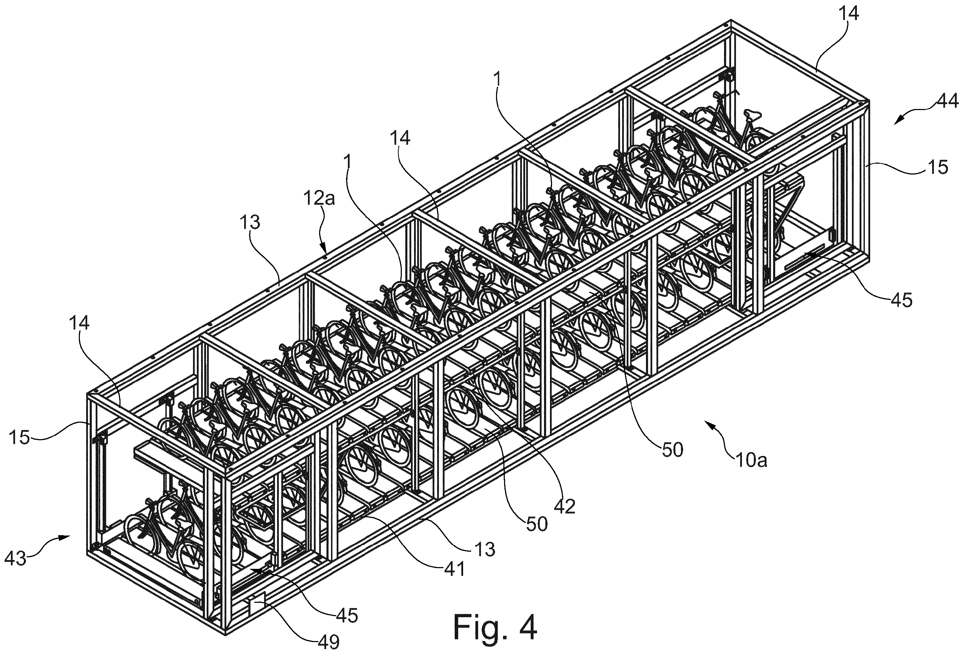

In der Fig. 1 ist in einem stark vereinfachten Längsschnitt eine erste erfindungsgemäße, zumindest im Wesentlichen quaderförmige Fahrradparkeinrichtung 10 dargestellt. Die Fahrradparkeinrichtung 10 ist als mobile, d.h. durch ein Transportmittel, wie einem Tieflader o.ä. Fahrzeug an unterschiedlichen Orten aufstellbare Fahrradparkeinrichtung 10 ausgebildet und weist hierzu eine quaderförmige Form auf. Die Länge L der Fahrradparkeinrichtung 10 ist insbesondere den üblicherweise vorhandenen Abmessungen einer Ladefläche des angesprochenen Transportmittels angepasst, und beträgt beispielsweise und nicht einschränkend ca. 14m. Dasselbe gilt für die senkrecht zur Zeichenebene der Fig. 1 verlaufende Breite der Fahrradparkeinrichtung 10, die beispielsweise etwas unter 3m beträgt. Die Höhe H der Fahrradparkeinrichtung 10 ist derart bemessen, dass innerhalb der Fahrradparkeinrichtung 10 zwei beispielsweise anhand der Fig. 4 erkennbare Fahrräder 1 übereinander angeordnet werden können. Beispielhaft beträgt die Höhe H etwa 3m.

Die Fahrradparkeinrichtung 10 weist eine steife Trägerstruktur 12 in Form einer verschweißten Stahlkonstruktion auf. Die Trägerstruktur 12 umfasst insbesondere in Längsrichtung der Fahrradparkeinrichtung 10 verlaufende Längsträger 13, Querträger 14 sowie senkrecht verlaufende Pfosten 15 (Fig. 1 und Fig. 4). Wesentlich hierbei ist, dass die Trägerstruktur 12 einen starren Verbund ausbildet, der dazu ausgebildet bzw. geeignet ist, alle beim Transport bzw. beim Auf- und Abladen von einem Transportmittel entstehenden Kräfte aufzunehmen, ohne dass die Trägerstruktur 12 hierbei Schaden nimmt.

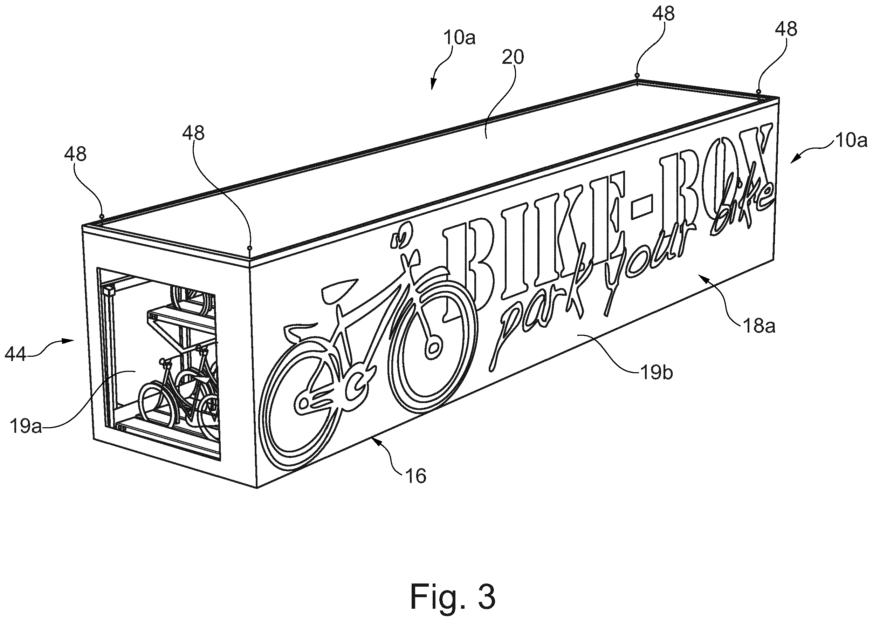

Darüber hinaus weist die Fahrradparkeinrichtung 10, wie am Besten anhand der Fahrradparkeinrichtung 10a gemäß der Fig. 3 erkennbar ist, ein äußeres Gehäuse 18 auf, das die Trägerstruktur 12 an allen Seiten, sowie vorzugsweise auch am Bodenbereich umgibt. Hierzu umfasst das Gehäuse 18 beispielsweise aus Stahl-Sandwichprofilen oder sonstigen geeigneten Materialien bestehende Seitenwände 19, eine Decke 20 und einen zumindest im Wesentlichen (insbesondere im Randbereich zu den Längsträgern 13) geschlossenen Boden 16.

Um in den Innenraum des Gehäuses 18 zu gelangen, weist die Fahrradparkeinrichtung 10 gemäß der Fig. 1 an einem stirnseitigen Endbereich 21 des Gehäuses 18 eine Zugangsöffnung in Form eines Türelements 22 auf. Das Türelement 22 ist in dem dargestellten Ausführungsbeispiel als Kipptürelement ausgebildet und umfasst zwei in einer Achse 23 schwenkbar zueinander angeordnete Abdeckungen 24, 25, wobei die eine Abdeckung 24 an der Oberseite des Gehäuses 18 angeschlagen ist und die untere Abdeckung 25 in Richtung des Pfeils 26 aus der in der Fig. 1 geöffnet dargestellten Stellung des Türelements 22 in eine Verschlussstellung überführbar ist, bei der der entsprechende Endbereich 21 des Gehäuses 18 verschlossen bzw. abgedeckt ist. Ein derartig ausgebildetes Türelement 22 ermöglicht somit ein Zugang bzw. einen Zugriff zu dem Innenraum des Gehäuses 18 in einem unteren Teilbereich des Gehäuses 18.

Ergänzend wird erwähnt, dass es selbstverständlich im Rahmen der Erfindung liegt, anstelle eines als Falttürelement ausgebildeten Türelements 22 andersartig ausgebildete Türelemente 22 vorzusehen bzw. auszubilden. Insbesondere kann das Türelement 22 auch in Form eines Rolltors o.ä. ausgebildet sein, das lediglich den unmittelbaren Bereich des Gehäuses 19 freigibt, in dem ein Zugang bzw. Zugriff zu dem Innenraum des Gehäuses 18 ermöglicht werden soll.

Die Fahrradparkeinrichtung 10 ist dazu ausgebildet, innerhalb des Gehäuses 18 fluchtend übereinander zwei Reihen 27, 28 mit jeweils einer Vielzahl von als Einzelaufbewahrungselementen ausgebildeten Aufnahmeboxen 30 für jeweils ein Fahrrad 1 aufzunehmen. Beispielhaft weist hierzu jede der Reihen 27, 28 jeweils siebzehn unmittelbar aneinander anschließende Aufnahmeboxen 30 auf.

Entsprechend der Fig. 2 umfasst die Aufnahmebox 30 einen eine im Wesentlichen rechteckförmige Grundfläche aufweisenden Boden 31 sowie zwei, an den Schmalseiten der Aufnahmebox 30 angeordnete (schmale) Seitenwände 32, 33 und eine, die beiden Seitenwände 32, 33 verbindende (breite) Seitenwand 34. Wesentlich dabei ist, dass die (breite) Seitenwand 34, die senkrecht zur Zeichenebene der Fig. 1 angeordnet ist, auch senkrecht zur Längserstreckung des Außengehäuses 12 bzw. zur Trägerstruktur 12 angeordnet ist. Das Be- bzw. Entladen einer Aufnahmebox 30 erfolgt von der der breiten Seitenwand 34 gegenüberliegenden offenen Seite her, die in einer entsprechenden Entnahme- bzw. Beladestellung der Aufnahmebox 30 mit dem Türelement 22 ausgerichtet ist.

Wie anhand der Fig. 2 erkennbar ist, kann es vorgesehen sein, dass innerhalb der Aufnahmebox 30 ein zusätzlicher, vorzugsweise separat verschließbarer Behälter 35 o.ä. zur Aufnahme vom Fahrrad 1 separater Gegenstände o.ä. angeordnet ist. Darüber hinaus kann es vorgesehen sein, dass die Aufnahmebox 30 eine lediglich symbolisch dargestellte Ladeeinrichtung 38 für eine Batterie eines E-Bikes aufweist. Die Ladeeinrichtung 38 kann im einfachsten Fall eine Steckdose, oder aber auch ein Ladegerät mit einem Ladekabel o.ä. sein. Es kann jedoch auch vorgesehen sein, dass die Ladung der Batterie des E-Bikes über eine induktiv arbeitende Ladeeinrichtung 38 erfolgt.

Die Aufnahmeboxen 30 können innerhalb jeder Reihe 27, 28 translatorisch in Längsrichtung des Gehäuses 18 bewegt werden. Hierzu sind an jeder Aufnahmebox 30 beispielsweise an den Schmalseiten angeordnete Rollenelemente 40 vorgesehen, die mit in Längsrichtung der Trägerstruktur 12 parallel angeordneten Führungsschienen 41, 42 zusammenwirken, welche lediglich in der Fig. 4 beispielhaft angedeutet bzw. dargestellt sind.

Innerhalb des Gehäuses 18 ist an den beiden stirnseitigen Enden 43, 44 jeweils eine Fördereinrichtung 45 zum Anheben bzw. Absenken jeweils einer Aufnahmebox 30 zwischen der unteren Reihe 27 und der oberen Reihe 28 und umgekehrt vorgesehen. Hierzu weist die Fördereinrichtung 45 entsprechende Hub- bzw. Senkeinrichtungen auf, die jeweils in Wirkverbindung mit einer Aufnahmebox 30 gelangen und diese aus der unteren Reihe 27 beispielsweise in Höhe der oberen Reihe 28 anheben. Darüber hinaus weist die Fördereinrichtung 45 ein Schubmittel 46 auf, um die Transportbox 30 in Richtung des jeweils gegenüberliegenden Endes 43, 44 der Trägerkonstruktion 12 zu bewegen. Hierzu ist es wesentlich, dass die Reihen 27, 28 entsprechend der Darstellung der Fig. 1 nicht vollständig mit entsprechenden Aufnahmeboxen 30 ausgefüllt sind, sondern dass sowohl in der unteren Reihe 27, als auch in der oberen Reihe 28 jeweils ein freier Stellplatz für eine Aufnahmebox 30 vorhanden ist. Dies bewirkt beispielhaft, dass bei einem Verschieben der in der Fig. 1 am einen Ende 43 in der oberen Reihe 28 angeordneten Aufnahmebox 30a in Richtung zum anderen Ende 44 hin alle in der oberen Reihe 28 befindlichen Aufnahmeboxen 30 um einen Platz nach links verschoben werden. Insbesondere gelangt dabei die an dem einen Ende 44 in der oberen Reihe 28 befindliche Aufnahmebox 30b in den Bereich der Fördereinrichtung 45. Der Transport der Aufnahmeboxen 30, 30a, 30b erfolgt somit durch Anlagekontakt mit benachbarten Aufnahmeboxen 30, 30a, 30b.

Ergänzend wird erwähnt, dass es selbstverständlich auch im Rahmen der Erfindung liegen soll, den Transport der Aufnahmeboxen 30, 30a, 30b auf andere Art und Weise erfolgen zu lassen. So ist es beispielsweise denkbar, die Aufnahmeboxen 30, 30a, 30b mit einem gemeinsamen Fördermittel in Form einer Antriebskette zu verbinden, die um in den Eckbereichen der Reihen 27, 28 angeordnete Umlenkräder o.ä. geführt ist.

Um beispielsweise eine freie Aufnahmebox 30 zur Beladung mit einem Fahrrad 1 bereitzustellen, ist es erforderlich, die entsprechende Aufnahmebox 30 in den Bereich des Türelements 22 zu fördern bzw. zu transportieren. Dies erfolgt durch Verschieben der vorgesehenen Aufnahmebox 30, indem die freie Aufnahmebox 30 im Sinne eines liegenden Paternosters im Uhrzeiger- bzw. Gegenuhrzeigersinn in den Bereich des Türelements 22 mittels der Fördereinrichtung 45 transportiert wird. Hierzu weist die Fahrradparkeinrichtung 10 eine nicht dargestellte Steuereinrichtung auf, die in Kenntnis der Position der jeweiligen Aufnahmebox 30, 30a, 30b und deren Beladungszustands die betreffende Aufnahmebox 30, 30a, 30b auf dem kürzesten Weg in den Bereich des Türelements 22 transportiert.

Um den Transport bzw. das Aufstellen der mobilen Fahrradparkeinrichtung 10 zu vereinfachen, kann es entsprechend der Darstellung der Fig. 3 bei der Fahrradparkeinrichtung 10, 10a vorgesehen sein, dass beispielhaft an der Oberseite des Gehäuses 18, 18a an den Eckbereichen vier Halte- und Transportelemente, beispielsweise in Form von Ringen 48 angeordnet sind, über die beispielsweise der Ausleger eines Ladekrans mittels Ketten o.ä. die Fahrradparkeinrichtung 10 als Einheit anheben kann. Darüber hinaus kann es vorgesehen sein, dass vorzugsweise innerhalb des Gehäuses 10 im Bereich der Trägerstruktur 12 Verankerungsmittel 49 vorgesehen sind, die eine Verankerung des Gehäuses 18 mit der Stellfläche, auf der das Gehäuse 18 abgestellt ist, ermöglichen (Fig. 4).

Die Fahrradparkeinrichtung 10a gemäß der Fig. 3 zeigt, dass an dem einen Ende 44 des Gehäuses 18a beispielsweise auch eine mit einem Plexiglaselement o.ä. ausgebildete Seitenwand 19a vorgesehen sein kann, die einen Blick in das Innere des Gehäuses 18a ermöglicht. Darüber hinaus ist erkennbar, dass die Seitenwand 19b beispielsweise auch als Werbefläche benutzt werden kann.

Die Fig. 4 bis 6 zeigen die Trägerstruktur 12a der Fahrradparkeinrichtung 10a im Detail. Insbesondere ist es auch denkbar, dass anstelle zumindest weitestgehend geschlossener Aufnahmeboxen 30, 30a, 30b lediglich im Wesentlichen rechteckförmige Aufnahmeplatten 50 zur Aufbewahrung jeweils eines Fahrrads 1 vorgesehen sein können.

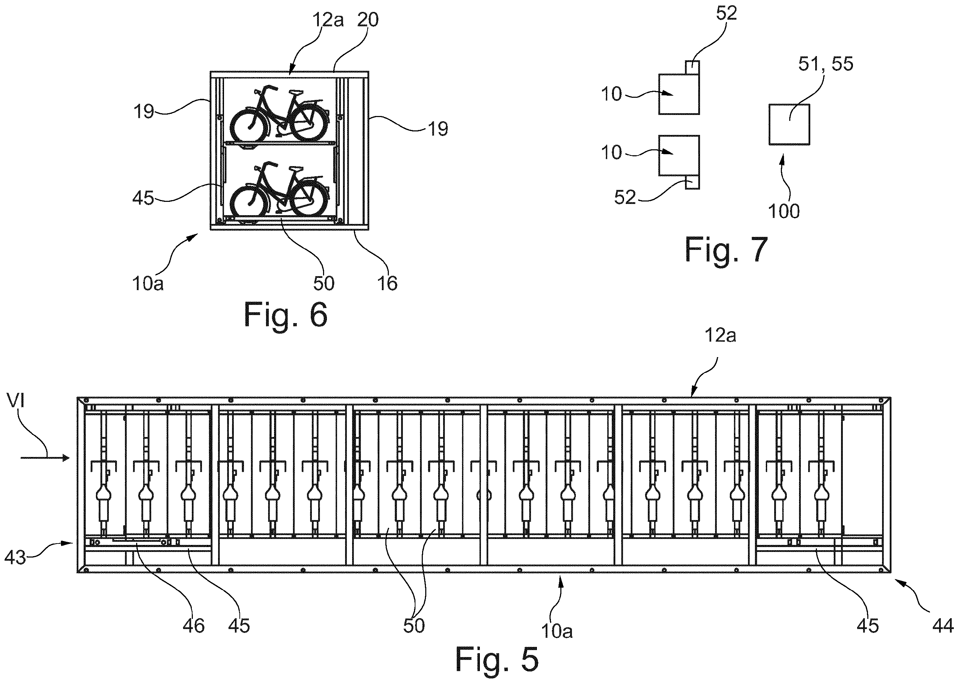

Eine Zugriffs- bzw. Entnahmemöglichkeit eines Fahrrads 1 an der Fahrradparkeinrichtung 10, 10a erfolgt typischerweise über ein unmittelbar an einer Fahrradparkeinrichtung 10a, 10a angeordnetes bzw. mit dem Gehäuse 18 verbundenes Bedienterminal 51, welche beispielhaft in der Fig. 1 dargestellt ist. Ebenso erfolgt die Bezahlung für die Benutzung einer Aufnahmebox 30, 30a, 30b ebenfalls an dem Bedienterminal 51. Es ist jedoch nicht erforderlich, das Bedienterminal 51 unmittelbar an dem Gehäuse 18, 18a der Fahrradparkeinrichtung 10, 10a zu befestigen. Alternativ kann es auch vorgesehen sein, dass ein entsprechendes Bedienterminal 51 auch örtlich getrennt von einer Fahrradparkeinrichtung 10, 10a abgestellt bzw. angeordnet ist. Dies kann insbesondere dann von Vorteil sein, wenn ein und dasselbe Bedienterminal 51 für mehrere Fahrradparkeinrichtungen 10, 10a vorgesehen ist. Ein entsprechender Anwendungsfall ist in der Fig. 7 dargestellt: Diese zeigt zwei voneinander unabhängige Fahrradparkeinrichtungen 10, bei denen jede Fahrradparkeinrichtung 10 drahtlose Kommunikationsmittel 52, 53 aufweist, die dazu dienen, beispielsweise Informationen einer Überwachungskamera und/oder Störungsmeldungen der Fahrradparkeinrichtung 10 und/oder Statusmeldungen über freie bzw. belegte Aufnahmeboxen 30, 30a, 30b o.ä. zu einem Knotenpunkt 55 zu übermitteln. Der Knotenpunkt 55 kann dabei beispielsweise das Bedienterminal 51 sein. Alternativ oder zusätzlich kann es sich bei dem Knotenpunkt 55 jedoch auch um einen Knotenpunkt handeln, über den über das Internet zugegriffen werden kann, oder der eine Verbindung in das Internet ermöglicht. Dabei kann über den Knotenpunkt 55 dann beispielsweise eine Reservierung einer Aufnahmebox 30, 30a, 30b, die Abrechnung von Parkgebühren, die Übermittelung von Service- bzw. Schadensinformationen zu einem Hersteller oder einem Wartungsdienst o.ä. erfolgen. Die Fahrradparkeinrichtung 10, 10a bildet somit zusammen mit den Kommunikationsmitteln 52, 53 ein Fahrradparksystem 100 aus, das in vielfältiger Art und Weise abgewandelt bzw. modifiziert werden kann, ohne vom Erfindungsgedanken abzuweichen. Dieser besteht im Wesentlichen darin, die Fahrradparkeinrichtung 10, 10a als mobile, transportierbare, autarke Fahrradparkeinrichtung 10, 10a auszubilden.

### Bezugszeichen

- 1: Fahrrad

- 10, 10a: Fahrradparkeinrichtung
- 12, 12a: Trägerstruktur
- 13: Längsträger
- 14: Querträger
- 15: Pfosten
- 16: Boden

- 18, 18a: Gehäuse
- 19, 19a, 19b: Seitenwand

- 20: Decke
- 21: Endbereich
- 22: Türelement
- 23: Achse
- 24: Abdeckung
- 25: Abdeckung
- 26: Pfeil
- 27: Reihe
- 28: Reihe

- 30, 30a, 30b: Aufnahmebox
- 31: Boden
- 32: Seitenwand
- 33: Seitenwand
- 34: Seitenwand
- 35: Behälter
- 38: Ladeeinrichtung
- 40: Rollenelement
- 41: Führungsschiene
- 42: Führungsschiene
- 43: Ende
- 44: Ende

- 45: Fördereinrichtung
- 46: Schubmittel

- 48: Ring
- 49: Verankerungsmittel
- 50: Aufnahmeplatte
- 51: Bedienterminal
- 52: Kommunikationsmittel
- 53: Kommunikationsmittel

- 55: Knotenpunkt

- 100: Fahrradparksystem

- L: Länge
- H: Höhe

## Patentansprüche

1. Fahrradparkeinrichtung (10; 10a), mit einem eine Vielzahl von Fahrrädern (1) aufnehmenden, zumindest im Wesentlichen geschlossen ausgebildeten Gehäuse (18; 18a), mit innerhalb des Gehäuses (18; 18a) angeordneten Aufbewahrungselementen (30, 30a, 30b; 50) für jeweils ein Fahrrad (1), mit wenigstens einer Zugangsöffnung (22) am Gehäuse (18; 18a) zum Be- oder Entladen eines Fahrrads (1) in oder aus einem Aufbewahrungselement (30, 30a, 30b; 50), mit einer Fördereinrichtung (45) zum Positionieren und/oder Bewegen der Aufbewahrungselemente (30, 30a, 30b; 50) innerhalb des Gehäuses (18; 18a), wobei das Gehäuse (18; 18a) zusätzlich zu Seitenwänden (19, 19a, 9b) und einer Decke (20) einen zumindest im Bereich der Seitenwände (19, 19a, 19b) geschlossenen, vorzugsweise einen zumindest im Wesentlichen vollständig geschlossenen Boden (16) aufweist, wobei das Gehäuse (18; 18a) und die Fördereinrichtung (45) starr mit einer Trägerstruktur (12; 12a) verbunden sind, und wobei das Gehäuse (18; 18a) zumindest im Wesentlichen quaderförmig ausgebildet ist,
**dadurch gekennzeichnet,**
**dass** das Aufbewahrungselement (30, 30a, 30b; 50) Rollenelemente (40) aufweist, die mit in Längsrichtung des Gehäuses (18; 18a) verlaufenden Führungsschienen (41, 42) zusammenwirken, derart, dass das Aufbewahrungselement (30, 30a, 30b; 50), zwischen den Führungsschienen (41, 42) translatorisch beweglich ausgebildet ist.

2. Fahrradparkeinrichtung nach Anspruch 1,
**dadurch gekennzeichnet,**
**dass** der Transport eines Aufbewahrungselements (30, 30a, 30b; 50) durch Anlagekontakt mit einem anderen Aufbewahrungselement (30, 30a, 30b; 50) erfolgt.

3. Fahrradparkeinrichtung nach Anspruch 1 oder 2,
**dadurch gekennzeichnet,**
**dass** innerhalb des Gehäuses (18; 18a) zwei übereinander angeordnete Reihen (27, 28) mit jeweils mehreren, parallel zueinander angeordneten Aufbewahrungselementen (30, 30a, 30b; 50) vorgesehen sind, wobei die Längsrichtung der jeweils einen zumindest im Wesentlichen einen rechteckförmigen Boden (31) aufweisenden Aufbewahrungselemente (30, 30a, 30b; 50) rechtwinklig zur Längserstreckung des Gehäuses (18; 18a) verläuft, und dass im Bereich zweier Endbereiche (43, 44) des Gehäuses (18; 18a) die Fördereinrichtung (45) eine Hebeeinrichtung zum Heben bzw. Absenken eines Aufbewahrungselements (30, 30a, 30b; 50) zwischen den Reihen (27, 28) aufweist.

4. Fahrradparkeinrichtung nach einem der Ansprüche 1 bis 3,
**dadurch gekennzeichnet,**
**dass** das Aufbewahrungselement (30, 30a, 30b) als ein bis auf eine mit der Zugangsöffnung (22) ausrichtbaren Öffnung geschlossenes Element ausgebildet ist.

5. Fahrradparkeinrichtung nach einem der Ansprüche 1 bis 4,
**dadurch gekennzeichnet,**
**dass** das Aufbewahrungselement (30, 30a, 30b; 50) einen Aufbewahrungsbehälter (35) für von dem Fahrrad (1) separate Gegenstände aufweist.

6. Fahrradparkeinrichtung nach einem der Ansprüche 1 bis 5,
**dadurch gekennzeichnet,**
**dass** wenigstens eines der Aufbewahrungselemente Aufbewahrungselement (30, 30a, 30b; 50) eine Ladeeinrichtung (38) zur Ladung einer Batterie eines E-Bikes aufweist.

7. Fahrradparkeinrichtung nach einem der Ansprüche 1 bis 6,
**dadurch gekennzeichnet,**
**dass** das Gehäuse (18; 18a) an gegenüberliegenden Endbereichen (43, 44) jeweils eine, mit einem Türelement (22) des Gehäuses (18; 18a) verschließbare Zugangsöffnung aufweist.

8. Fahrradparkeinrichtung nach einem der Ansprüche 1 bis 7,
**dadurch gekennzeichnet,**
**dass** das Gehäuse (18; 18a) und/oder die Trägerstruktur (12; 12a) Verankerungsmittel (49) zum Verankern des Gehäuses (18; 18a) bzw. der Trägerstruktur (12; 12a) mit einer Stellfläche und/oder Halte- und Transportelemente (48) zum Transportieren des Gehäuses (18; 18a) aufweist.

9. Fahrradparksystem (100), umfassend wenigstens eine Fahrradparkeinrichtung (10a; 10a) nach einem der Ansprüche 1 bis 8 sowie drahtlose Kommunikationsmittel (51, 52) zur Datenübertragung zwischen der wenigstens einen Fahrradparkeinrichtung (10; 10a) und einem Datenknotenpunkt (55).

10. Fahrradparksystem nach Anspruch 9,
**dadurch gekennzeichnet,**
**dass** die drahtlose Kommunikationseinrichtung (51, 52) dazu ausgebildet ist, Überwachungskamerainformationen und/oder Störungsmeldungen und/oder Statusmeldungen und/oder Zahlungsinformationen der wenigstens einen Fahrradparkeinrichtung (10; 10a) zu übermitteln.

11. Fahrradparksystem nach Anspruch 9 oder 10,
**dadurch gekennzeichnet,**
**dass** der Datenknotenpunkt (55) eine Verbindung mit dem Internet ermöglicht und/oder eine stationäre Einheit (51), insbesondere ein Bedienterminal ist.

## Claims

1. A bicycle parking device (10; 10a) with a housing (18; 18a) accommodating a plurality of bicycles (1) and constituted at least essentially closed, with storage elements (30, 30a, 30b; 50) arranged inside the housing (18; 18a) each for one bicycle (1), with at least one access opening (22) on the housing (18; 18a) for loading or unloading a bicycle (1) into or out of a storage element (30, 30a, 30b; 50), with a conveying device (45) for positioning and/or moving the storage elements (30, 30a, 30b; 50) inside the housing (18; 18a), wherein the housing (18; 18a) comprises, in addition to side walls (19, 19a, 19b) and a top (20), a bottom (16) which is closed at least in the region of the side walls (19, 19a, 19b) and preferably is at least essentially completely closed, wherein the housing (18; 18a) and the conveying device (45) are rigidly connected to a support structure (12; 12a), and wherein the housing (18; 18a) is constituted at least essentially rectangular,
**characterised in that**
the storage element (30, 30a, 30b; 50) comprises roller elements (40), which cooperate with guide rails (41, 42) running in the longitudinal direction of the housing (18; 18a), in such a way that the storage element (30, 30a, 30b; 50) is constituted movable in a translatory manner between the guide rails (41, 42).

2. The bicycle parking device according to claim 1,
**characterised in that**
the transport of a storage element (30, 30a, 30b; 50) takes place by means of abutting contact with another storage element (30, 30a, 30b; 50).

3. The bicycle parking device according to claim 1 or 2,
**characterised in that**
two rows (27, 28) arranged one above the other each with a plurality of storage elements (30, 30a, 30b; 50) arranged parallel with one another are provided inside the housing (18; 18a), wherein the longitudinal direction of the storage elements (30, 30a, 30b; 50) each comprising an at least essentially rectangular bottom (31) runs at right angles to the longitudinal extension of the housing (18; 18a), and that, in the region of the two end regions (43, 44) of the housing (18; 18a), the conveying device (45) comprises a lifting device for lifting and lowering a storage element (30, 30a, 30b; 50) between the rows (27, 28).

4. The bicycle parking device according to any one of claims 1 to 3,
**characterised in that**
the storage element (30, 30a, 30b) is constituted as a closed element apart from an opening which can be aligned with the access opening (22).

5. The bicycle parking device according to any one of claims 1 to 4,
**characterised in that**
the storage element (30, 30a, 30b; 50) comprises a storage container (35) for objects separate from the bicycle (1).

6. The bicycle parking device according to any one of claims 1 to 5,
**characterised in that**
at least one of the storage elements (30, 30a, 30b; 50) comprises a charging device (38) for charging a battery of an e-bike.

7. The bicycle parking device according to any one of claims 1 to 6,
**characterised in that**
the housing (18; 18a) at opposite end regions (43, 44) comprises in each case an access opening closeable with a door element (22) of the housing (18; 18a).

8. The bicycle parking device according to any one of claims 1 to 7,
**characterised in that**
the housing (18; 18a) and/or the support structure (12; 12a) comprises anchoring means (49) for anchoring the housing (18; 18a) or the support structure (12; 12a) to a storage space and/or holding and transport elements (48) for transporting the housing (18; 18a).

9. A bicycle parking system (100), comprising at least one bicycle parking device (10; 10a) according to any one of claims 1 to 8 and wireless communication means (51, 52) for the data transmission between the at least one bicycle parking device (10; 10a) and a data nodal point (55).

10. A bicycle parking system according to claim 9,
**characterised in that**
the wireless communication device (51, 52) is designed to communicate monitoring camera information and/or malfunction messages and/or status messages and/or payment information of the at least one bicycle parking device (10; 10a).

11. A bicycle parking system according to claim 9 or 10,
**characterised in that**
the data nodal point (55) enables a connection to the Internet and/or is a stationary unit (51), in particular an operator terminal.

## Revendications

1. Installation de stationnement de vélo (10 ; 10a) comprenant un boîtier (18 ; 18a) recevant une pluralité de vélos (1), réalisé de manière au moins essentiellement fermée, avec des éléments de rangement (30, 30a, 30b ; 50) disposés à l'intérieur du boîtier (18 ; 18a), à chaque fois pour un vélo (1), avec au moins une ouverture d'accès (22) au niveau du boîtier (18 ; 18a) pour charger ou décharger un vélo (1) dans ou hors d'un élément de rangement (30, 30a, 30b ; 50), avec un dispositif de transport (45) pour positionner et/ou déplacer les éléments de rangement (30, 30a, 30b ; 50) à l'intérieur du boîtier (18 ; 18a), le boîtier (18 ; 18a) présentant en plus de parois latérales (19, 19a, 19b) et d'un couvercle (20) un fond (16) fermé, de préférence au moins essentiellement fermé complètement au moins dans la région des parois latérales (19, 19a, 19b), le boîtier (18 ; 18a) et le dispositif de transport (45) étant connectés rigidement à une structure de support (12 ; 12a), et le boîtier (18 ; 18a) étant réalisé au moins essentiellement sous forme parallélépipédique, **caractérisée en ce que** l'élément de rangement (30, 30a, 30b ; 50) présente des éléments de roulement (40) qui coopèrent avec des rails de guidage (41, 42) s'étendant dans la direction longitudinale du boîtier (18 ; 18a), de telle sorte que l'élément de rangement (30, 30a, 30b ; 50) soit réalisé de manière déplaçable en translation entre les rails de guidage (41, 42).

2. Installation de stationnement de vélo selon la revendication 1, **caractérisée en ce que** le transport d'un élément de rangement (30, 30a, 30b ; 50) s'effectue par contact d'appui avec un autre élément de rangement (30, 30a, 30b ; 50).

3. Installation de parking de vélo selon la revendications 1 ou 2, **caractérisée en ce que** deux rangées (27, 28) disposées l'une au-dessus de l'autre à l'intérieur du boîtier (18 ; 18a) avec à chaque fois plusieurs éléments de rangement (30, 30a, 30b ; 50) disposés parallèlement les uns aux autres sont prévues, la direction longitudinale des éléments de rangement (30, 30a, 30b ; 50) présentant à chaque fois un fond (31) au moins essentiellement rectangulaire s'étendant perpendiculairement à l'étendue longitudinale du boîtier (18 ; 18a) et **en ce que** dans la région de deux régions d'extrémité (43, 44) du boîtier (18 ; 18a), le dispositif de transport (45) présente un dispositif de levage pour lever ou abaisser un élément de rangement (30, 30a, 30b ; 50) entre les rangées (27, 28).

4. Installation de stationnement de vélo selon l'une quelconque des revendications 1 à 3, **caractérisée en ce que** l'élément de rangement (30, 30a, 30b) est réalisé sous forme d'élément fermé à l'exception d'une ouverture pouvant être alignée avec l'ouverture d'accès (22).

5. Installation de stationnement de vélo selon l'une quelconque des revendications 1 à 4, **caractérisée en ce que** l'élément de rangement (30, 30a, 30b ; 50) présente un conteneur de rangement (35) pour des objets séparés du vélo (1).

6. Installation de stationnement de vélo selon l'une quelconque des revendications 1 à 5, **caractérisée en ce qu'**au moins l'un des éléments de rangement (30, 30a, 30b ; 50) présente un dispositif de charge (38) pour le chargement d'une batterie d'un E-Bike.

7. Installation de stationnement de vélo selon l'une quelconque des revendications 1 à 6, **caractérisée en ce que** le boîtier (18 ; 18a) présente, au niveau de régions d'extrémité opposées (43, 44), à chaque fois une ouverture d'accès pouvant être fermée avec un élément de porte (22) du boîtier (18 ; 18a).

8. Installation de stationnement de vélo selon l'une quelconque des revendications 1 à 7, **caractérisée en ce que** le boîtier (18 ; 18a) et/ou la structure de support (12 ; 12a) présente(nt) des moyens d'ancrage (49) pour ancrer le boîtier (18 ; 18a) ou la structure de support (12 ; 12a) à une surface au sol et/ou des éléments de retenue et de transport (48) pour transporter le boîtier (18 ; 18a).

9. Système de stationnement de vélo (100), comprenant au moins une installation de stationnement de vélo (10 ; 10a) selon l'une quelconque des revendications 1 à 8, ainsi que des moyens de communication sans fil (51, 52) pour le transfert de données entre l'au moins une installation de stationnement de vélo (10 ; 10a) et un noeud de données (55).

10. Système de stationnement de vélo selon la revendication 9, **caractérisé en ce que** le dispositif de communication sans fil (51, 52) est réalisé de manière à transmettre des informations de caméra de surveillance et/ou des messages de pannes et/ou des messages d'état et/ou des informations de paiement de l'au moins une installation de stationnement de vélo (10 ; 10a).

11. Système de stationnement de vélo selon la revendication 9 ou 10, **caractérisé en ce que** le noeud de données (55) permet une liaison à l'internet et/ou une unité stationnaire (51), en particulier un terminal de commande.
